# EUROPEAN PATENT APPLICATION

(11) **EP 2 532 892 A1**
(43) Date of publication of application: **12.12.2012**
(21) Application number: 11169524.3
(22) Date of filing: 10.06.2011
(51) Int. Cl.: F03D 11/00, F03D 9/00, H02K 7/18

(54) **Generator for a wind turbine**

(71) Applicant: Siemens Aktiengesellschaft, 80333 München (DE)
(72) Inventor: Semmer, Silvio, 7330 Brande (DK)

(57) **Abstract**

Generator (1) for a wind turbine (2), comprising a stator (5) and a rotor (3), with the rotor (3) being rotatably supported relative to the stator (5) by means of at least one generator bearing (7), whereby the at least one generator bearing (7) is disposed within a radial gap (8) between the stator (5) and the rotor (3) with the generator bearing (7) having magnetic flux conducting properties.

## Description

The invention relates to a generator for a wind turbine, comprising a stator and a rotor, with the rotor being rotatably supported relative to the stator by means of at least one generator bearing.

The general constructive design of a wind turbine, particularly a direct drive wind turbine, comprising a generator is widely known. Thereby, the rotor of the generator, which is connected to the rotatably supported rotor hub, i.e. the drive end of the wind turbine, is usually supported on the outer ring of at least one generator bearing. The stator of the generator is usually supported on the inner ring of the generator bearing, with the inner ring being attached to the non-drive end of the wind turbine, i.e. on a non-rotating component of the wind turbine.

Especially for direct drive wind turbines, the generator bearing has to be mechanically stiff so as to maintain the air gap extending between the rotor and the stator. Thereby the generator bearing has to withstand loads, particularly bending loads, originating from the rotor blades attached to the rotor hub and/or from magnetic interactions between the rotor and the stator. Keeping the air gap constant is often-times problematic.

In order to stabilise the support of the rotor of the generator, it has been proposed to provide a further supportive generator bearing axially spaced apart to the main generator bearing on essential non-rotating shaft, i.e. the non-drive end of the wind turbine. Thereby usually plain bearings are used. This approach is deemed as constructively complex and costly.

Hence, it is the object of the present invention to improve a respective generator for a wind turbine regarding a mechanical stable design.

This is achieved by a generator as mentioned above, characterised in that the at least one generator bearing is disposed within a radial gap between the stator and the rotor with the generator bearing having magnetic flux conducting properties.

The invention is based on the idea to dispose the at least one generator bearing directly in between the rotor and the stator of the respective generator of the respective wind turbine. Thus, the annular space, ie the air gap extending between the rotor and stator in conventional generator setups is inventively used for accommodating the respective at least one generator bearing. In such a manner, the respective annular space between the rotor and the stator is provided with the at least one generator bearing. Conventionally used generator bearing setups with respective generator bearings disposed at the drive-end and the non-drive end of the wind turbine are overcome by the inventive principle.

The inventive principle provides the generator and the entire wind turbine with mechanical stability so that high loads on the bearings may be essentially decreased. Particularly, bending moments on the generator bearing originating from the rotor blades of the wind turbine may be significantly reduced.

Thereby, the mechanical stability of the generator bearing is mainly defined by its axial dimensions. According to the present invention, the outer surface of the generator bearing may be highly increased in comparison to conventional setups so that respective loads may be distributed on a larger area leading to a reduction of stress and therefore higher reliability of the generator bearing.

Generally, it is preferred that respective generator bearing extends along the entire axial length of the gap between the rotor and the stator. Yet, in certain embodiments, the axial length of the bearing, i.e. the width of the bearing rings may be smaller or larger than the length of the axial gap extending between the rotor and the stator.

Further, the inventive principle provides an easy way to maintain constant radial positions of both the rotor and the stator, i.e. there are no problems regarding the maintenance of a respective radial distance in terms of an air gap between the rotor and the stator. In contrast, the radial distance between the rotor and the stator is simply defined by the radial distance between the inner and the outer ring of the respective generator bearing(s).

Aside, the axial dimensions of both the rotor and the stator may be reduced since the inventive principle increases the efficiency of the generator. Hence, the construction of the generator is more compact which also leads to a reduction of material and costs.

It is understood that the respective generator bearing(s) are made of or comprise a material having magnetic flux conducting properties so that the respective generator bearing(s) do(es) not negatively influence the operation of the generator.

There are two possible setups for the inventive generator, whereby the first setup provides the inner ring of the bearing attached to a stator yoke and the outer ring of the bearing attached to a rotor yoke. This setup relates to generators having an outer rotor - inner stator configuration. Alternatively, it is conceivable that the inner ring of the bearing is attached to a rotor yoke and the outer ring of the bearing is attached to a stator yoke. This setup relates to generators having an outer stator - inner rotor configuration. Hence, the inventive principle is applicable for both generally possible configurations of respective generators or electrical machines respectively.

In order to keep the respective generator bearings secure in place, it is preferred that the outer ring or inner ring of the bearing comprises at least one recess adapted to accommodate respective permanent magnets of the rotor. The dimensions of the recess are essentially adapted to the dimensions of the respective permanent magnets. This embodiment generally relates to a form closure of the bearing, ie the respective recess of the inner or outer ring, and the permanent magnets of the rotor inhibiting the respective bearing from any axial movements.

The generator bearing may be a roller bearing or a plain bearing. Consequently, the generator bearing may comprise respective rolling elements such as balls, cylinders, or needles for instance in the case of roller bearings. Alternatively, the respective outer and inner ring of the bearing may be in direct contact, whereby a respective lubrication layer may be disposed in between the outer and inner ring of the bearing if need be. Generally, all types of bearings may be used for the inventive principle.

It is of advantage that the outer ring and/or the inner ring and/or at least one rolling element and/or a lubricant of the bearing is built of a magnetic or magnetisable material. By increasing the magnetic properties, i.e. magnetic flux conducting properties of the bearing or respective components of the bearing, the axial dimensions of both the rotor and the stator, i.e. the entire generator, may be reduced since the efficiency of the generator may be increased as mentioned above.

Aside to the case that the bearing has the same axial length as the radial gap between the rotor and the stator, it is further possible that at least two axially adjacently disposed bearings are disposed within the radial gap, i.e. a number of respective axially aligned or abutting generator bearings may be disposed within the radial gap or annular space between the rotor and the stator. Thereby, it is possible that an axial gap extends between at least two bearings so that there is a free annular space defined between the respective bearings, ie an annular space between the rotor and the stator which is not occupied by respective bearings. In such a manner, the magnetic interactions between the rotor and the stator may be adjusted.

The invention further relates to a wind turbine, particularly a direct drive wind turbine, comprising a generator as has been described before. The generator comprises a rotor and a stator with the rotor being connected to the drive end of the wind turbine, whereas the stator being connected to the non-drive end of the wind turbine. The rotor is rotatably supported relative to the stator by means of at least one generator bearing, which generator bearing is disposed within a radial gap between the stator and the rotor.

In the following, the invention is described in detail as reference is made to the figures, whereby:
- fig. 1: shows a principle longitudinal cut view of a generator for a wind turbine according to an exemplary embodiment of the invention;
- fig. 2: shows a principle partial cross-sectional cut view of a generator for a wind turbine according to an exemplary embodiment of the invention;
- fig. 3: shows a principle partial cross-sectional cut view of a generator for a wind turbine according to an exemplary embodiment of the invention; and
- fig. 4: shows a principle partial longitudinal cut view of a generator for a wind turbine according to an exemplary embodiment of the invention.

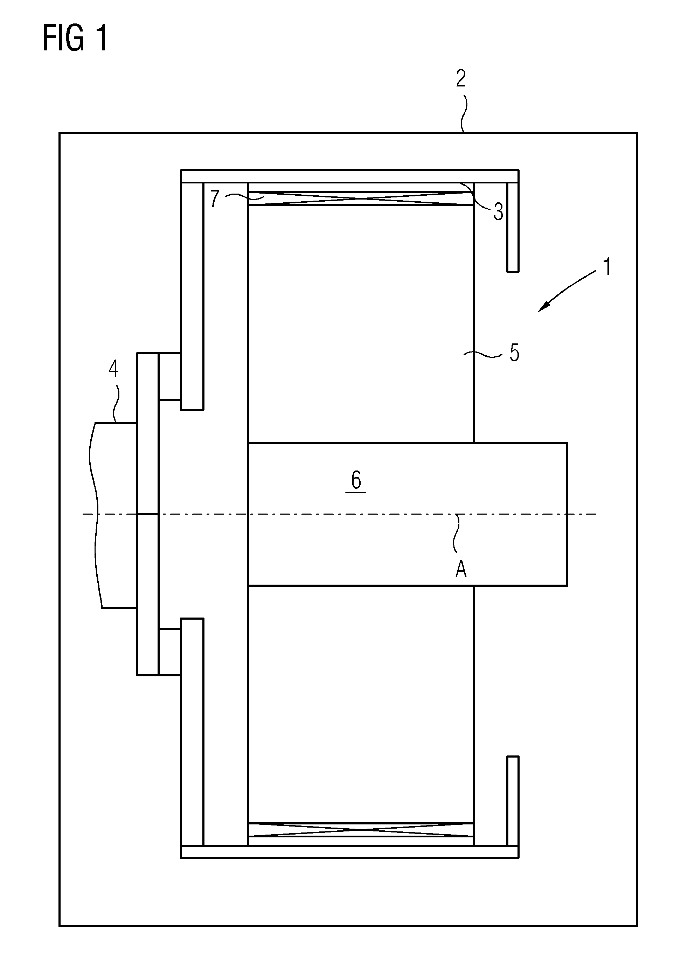

Fig. 1 shows a principle cut view of a generator 1 for a wind turbine 2 according to an exemplary embodiment of the invention. The wind turbine 2 is a direct drive wind turbine, i.e. the rotor 3 of the generator 1 is directly connected to a rotor hub 4 supporting respective rotor blades (not shown), i.e. the drive end of the wind turbine 2. The stator 5 is supported on a non-rotatable shaft 6 or any other non-rotating component of the wind turbine 2. The centre axis of the wind turbine is denoted at "A".

The rotor 3 is rotatably supported relative to the stator 5 by means of a generator bearing 7 which is directly disposed within a radial gap 8 or annular space between the rotor 3 and the stator 5. The generator bearing 7 has magnetic flux conducting properties so that proper operation of the generator 1 is always assured. As is discernible, the generator bearing 7 has the same axial length as the radial gap 8 between the rotor 3 and the stator 5.

Consequently, an air gap extending between the rotor and stator of conventional generators is not given in the inventive principle. Aside, respective generator bearings on the drive end possibly additional bearings on the non-drive end of the wind turbine are not required.

The inventive principle allows a reduction of the mechanical load on the generator bearing 7 since the generator bearing 7 has an increased outer surface so that applied loads may be distributed over an enlarged area leading to a reduction of stress per bearing surface area and further higher reliability.

Furthermore, the radial positions of both the rotor 3 and the stator 5 are clearly defined by the radial distance between the respective outer and inner ring of the generator bearing 7 so that proper operation of the generator 2 is guaranteed even in high load situations. Deviations of the magnetic interactions between rotor 3 and stator 5 are inhibited since the inventive principle does not allow respective changes of the radial distance between the rotor 3 and the stator 5.

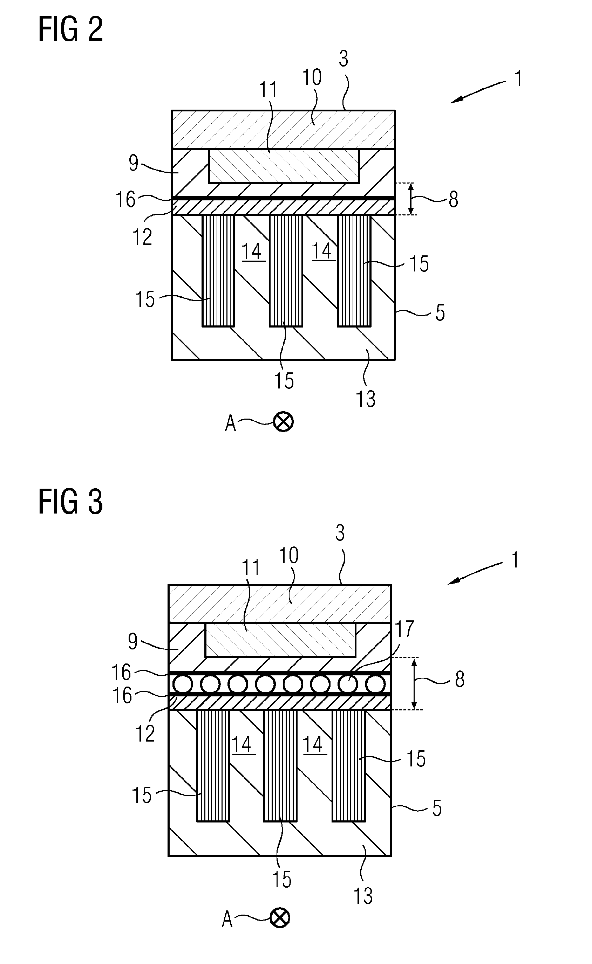

Fig. 2 shows a principle partial cut view of a generator 1 for a wind turbine 2 according to another exemplary embodiment of the invention. Thereby, the generator bearing 7 is built as a plain bearing, whereby the outer ring 9 of the generator bearing 7 is attached to the rotor yoke 10, thereby encasing the permanent magnets 11 of the rotor 3, ie the outer ring 9 is provided with a recess corresponding to the shape of the permanent magnets 11. Hence, the outer ring 9 of the generator bearing 7 is held in place by encompassing the permanent magnets 11 of the rotor 3.

The inner ring 12 of the generator bearing 7 is attached to the stator yoke 13, i.e. respective radially extending stator teeth 14. In known manner, respective stator windings 15 are accommodated between the stator teeth 14. In order to enhance the lifetime of the generator bearing 7, a lubrication layer 16 may be provided between the outer ring 9 and the inner ring 12 of the generator bearing 7 so as to inhibit or at least reduce friction and wear effects.

All respective components of the generator bearing 7, i.e. the respective outer and inner ring 9, 12 as well as the lubrication layer 16 have magnetic flux conductive properties, i.e. are built of or comprise a magnetic or magnetisable material such as ferromagnetic-alloys or respective ferromagnetic particles for instance.

Fig. 3 shows a principle partial cut view of a generator 1 for a wind turbine 2 according to a further exemplary embodiment of the invention. Thereby, the generator bearing 7 is built as a roller bearing, i.e. a number of roller elements 17 in the shape of balls are disposed between the outer ring 9 and the inner ring 12 of the generator bearing 7. The roller elements 17 are made of a magnetic or magnetisable material. The generator bearing 7 is also provided with a lubrication layer 16 having magnetic flux conducting properties.

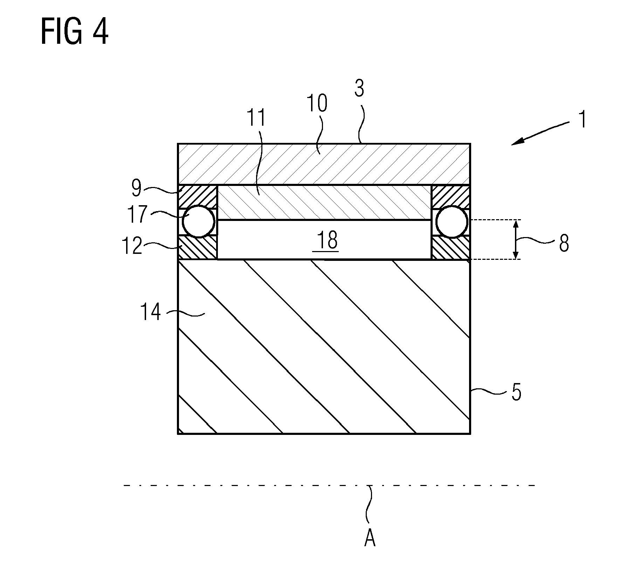

The embodiments shown in fig. 1 - 3 depict merely one single generator bearing 7 within the radial gap 8 between the rotor 3 and the stator 5. In contrast thereto, the embodiment of fig. 4 shows two respective axially adjacently disposed generator bearings 7 disposed between the rotor 3 and the stator 5 of the generator 2. Thereby, an annular space 18 extends between the respective generator bearings 7, i.e. the left and the right generator bearing 7. In such a manner, it is possible to influence the magnetic interactions between the respective permanent magnets 11 of the rotor 3 and the stator 5, ie the permanent magnets 11 and the stator windings 15. Of course, it is possible to dispose more than two respective generator bearings 7 within the radial gap 8 between the rotor 3 and the stator 5.

The preceding embodiments show a generator setup having the inner ring 12 of the rotor 3 attached to the rotor yoke 10, whereas the outer ring 9 of the generator bearing 7 is attached to the stator yoke 13. Hence, the respective embodiments show generator setups having an outer rotor 3 - inner stator 5 configuration. Yet, the inventive principle is also applicable for generators 2 having an outer stator 5 - inner rotor 3 configuration, i.e. in this case the inner ring 12 of the generator bearing 7 is attached to the rotor yoke 10 and the outer ring 12 of the generator bearing 7 is attached to the stator yoke 13.

## Claims

1. Generator (1) for a wind turbine (2), comprising a stator (5) and a rotor (3), with the rotor (3) being rotatably supported relative to the stator (5) by means of at least one generator bearing (7), **characterised in that** the at least one generator bearing (7) is disposed within a radial gap (8) between the stator (5) and the rotor (3) with the generator bearing (7) having magnetic flux conducting properties.

2. Generator according to claim 1, **characterised in that** the inner ring (12) of the generator bearing (7) is attached to a stator yoke (13) and the outer ring (12) of the generator bearing (7) is attached to a rotor yoke (10) or vice versa.

3. Generator according to claim 2, **characterised in that** the outer ring (9) or inner ring (12) of the generator bearing (7) comprises at least one recess adapted to accommodate respective permanent magnets (10) of the rotor (3).

4. Generator according to one of the preceding claims, **characterised in that** the generator bearing (7) is a roller bearing or a plain bearing.

5. Generator according to one of the preceding claims, **characterised in that** the outer ring (9) and/or the inner ring (12) and/or at least one rolling element (17) and/or a lubricant (16) of the bearing is built of a magnetic or magnetisable material.

6. Generator according to one of the preceding claims, **characterised in that** the generator bearing (7) has the same axial length as the radial gap (8) between the rotor (3) and the stator (5).

7. Generator according to one of the claims 1 to 5, **characterised in that** at least two axially adjacently disposed generator bearings (7) are disposed within the radial gap (8), whereby an axial gap extends between the at least two generator bearings (7).

8. Wind turbine (2), particularly direct drive wind turbine, comprising a generator (1) according to one of the preceding claims.
